Europäisches Patentamt

European Patent Office

Office européen des brevets

(11) Veröffentlichungsnummer: **0 342 469 B1**

(19)

# (12) EUROPÄISCHE PATENTSCHRIFT

(45) Veröffentlichungstag der Patentschrift: **10.02.93**

(21) Anmeldenummer: **89108250.5**

(22) Anmeldetag: **08.05.89**

(51) Int. Cl.⁵: **H04J 3/16**

---

(54) **Verfahren zum Einfügen eines asynchronen 139 264-kbit/s-Signals in ein 155 520-kbit/s-Signal.**

---

(30) Priorität: **11.05.88 DE 3816235**

(43) Veröffentlichungstag der Anmeldung:
**23.11.89 Patentblatt 89/47**

(45) Bekanntmachung des Hinweises auf die
Patenterteilung:
**10.02.93 Patentblatt 93/06**

(84) Benannte Vertragsstaaten:
**AT BE CH DE ES FR GB GR IT LI NL SE**

(56) Entgegenhaltungen:
**EP-A- 0 216 456**
**US-A- 4 520 480**

**ANT NACHRICHTENTECHNISCHE BERICHTE,
Nr. 4, Mai 1987, Seiten 92-101, Backnang, DE;
L. GOHM et al.: "Auf dem Wege zu einem
universellen Kommunikationsnetz"**

(73) Patentinhaber: **SIEMENS AKTIENGESELL-
SCHAFT**
**Wittelsbacherplatz 2**
**W-8000 München 2(DE)**

(72) Erfinder: **Müller, Horst, Dipl.-Ing.**
**Dammstrasse 11**
**W-8021 Hohenschäftlarn(DE)**
Erfinder: **Förg, Pirmin, Dr.-Ing.**
**Nockerweg 10**
**W-8018 Grafing(DE)**

**Beschreibung**

Die Erfindung bezieht sich auf ein Verfahren zum Einfügen eines asynchronen 139 264-kbit/s-Signals nach der CCITT-Empfehlung G.754 in den Pulsrahmen eines 155 520-kbit/s-Signals nach den CCITT-Empfehlungsentwürfen G.70X, G.70Y und G.70Z mit einem aus 9, jeweils zuerst 1 byte für einen Pfadkopfteil und anschließend weitere 260 byte enthaltenden Reihen bestehenden virtuellen Container.

Aus der Zeitschrift "Telecommunications", März 1988, Seiten 63, 65 und 66 ist ein synchrones optisches Netzwerk SONET mit Netzwerkknoten-Schnittstellen NNI für internationalen Gebrauch bekannt. Dieses System arbeitet mit einer Hierarchie von Digitalsignalen STM-1 mit einer Bitrate von 155 520 kbit/s, STM-4 mit einer Bitrate von 622 080 kbit/s und eventuell weiteren Digitalsignalen wie STM-8, STM-12 und STM-16. Jedem dieser Digitalsignale ist ein Pulsrahmen zugeordnet. In den Pulsrahmen des Digitalsignals STM-1 lassen sich Digitalsignale geringerer Bitrate der europäischen, der japanischen oder der US-Hierarchie einfügen.

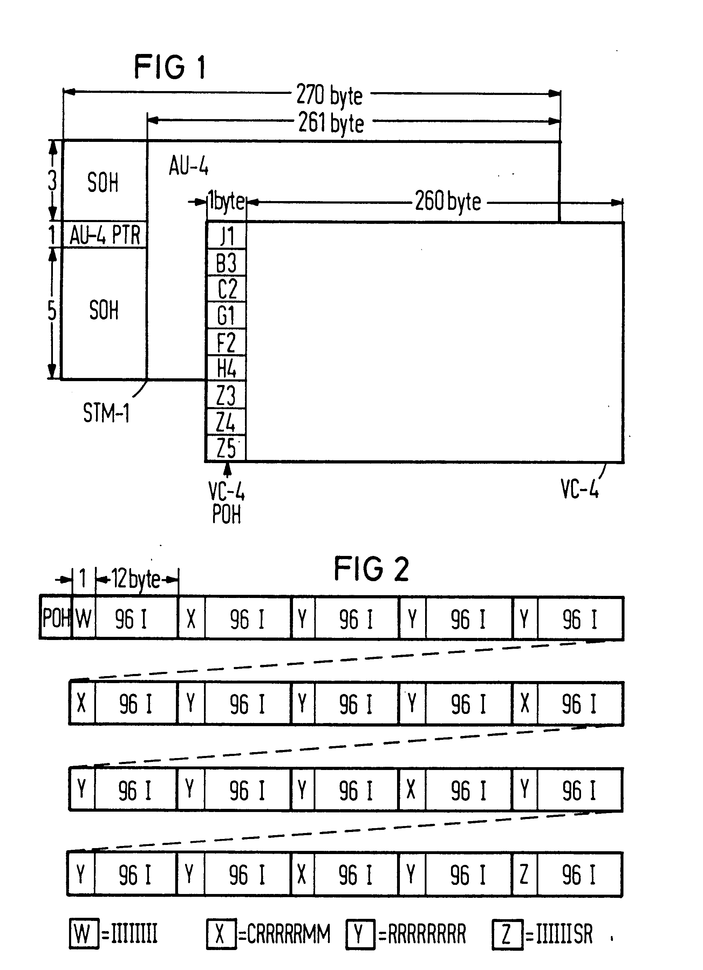

Fig. 1 zeigt den Pulsrahmen des Digitalsignals STM-1 mit einem Kopfabschnitt (section overhead SOH), einer Verwaltungseinheit (administration unit AU-4) und einem Verwaltungseinheitszeiger (administration unit pointer AU-4 PTR). Der Pulsrahmen besteht aus 9 Reihen, die aus Gründen der Platzersparnis in einem Pufferspeicher nicht hintereinander sondern untereinander angeordnet sind, und 270 Spalten, die jeweils 1 byte oder 8 bit pro Reihe umfassen. Der Kopfabschnitt (SOH) und der Verwaltungseinheitszeiger (AU-4 PTR) nehmen die ersten 9 Spalten ein.

In die Verwaltungseinheit (AU-4) werden virtuelle Container (VC-4) eingefügt, deren Anfang innerhalb der Verwaltungseinheit (AU-4) der Verwaltungseinheitszeiger (AU-4 PTR) angibt. Der virtuelle Container (VC-4) enthält die gleiche Reihen- und Spaltenzahl wie die Verwaltungseinheit (AU-4). Eine erste 1-byte-breite Spalte dient der Aufnahme eines Pfadkopfteils (path overhead POH) mit Bytes I1, B3, C2, G1, F2, H4, Z3, Z4 und Z5. An diese Spalte schließen sich in jeder Reihe 260 byte an.

Aufgabe der Erfindung ist es, ein Verfahren anzugeben, nach dem in den virtuellen Container VC-4 ein asynchrones 139 264-kbit/s-Signal der europäischen Hierarchie eingefügt werden kann.

Diese Aufgabe wird erfindungsgemäß mit den Merkmalen des Patentanspruchs 1 gelöst.

Der SONET-Rahmen stellt pro Reihe 260 byte · 8 = 2080 bit zur Verfügung.

Für die Übertragung des 139 264-kbit/s-Signals werden

$$\frac{139\ 264 \cdot 10^3}{8\ \text{kHz} \cdot 9\ \text{Reihen}} = 1934{,}\overline{2}\ \text{bit pro Reihe benötigt.}$$

Bei einer Aufteilung dieser 1934,$\overline{2}$ bit auf 20 Blöcke fallen auf jeden Block

$$\frac{1934{,}\overline{2}}{20} = 96{,}7\overline{1}\ \text{bit.}$$

Werden in jedem zweiten Teil der Blöcke 96 bit Nutzinformation übertragen, so müssen die restlichen 14,$\overline{2}$ bit (1934,$\overline{2}$ - 96 · 20 = 14,$\overline{2}$ bit) in ersten Teilen der Blöcke untergebracht werden. Es werden im ersten Teil W 8 bit und im ersten Teil Z 6 bit hierfür vorgesehen. Die restlichen 0,$\overline{2}$ bit Nutzinformation werden mit Hilfe des Stopfverfahrens an der Stelle des Bits S im ersten Teil des Blockes Z untergebracht. Dadurch ergibt sich ein positives Stopfverfahren mit der relativen Füllfrequenz $\vartheta$ = 0,$\overline{7}$.

$$\text{rel. Füllfrequenz } \vartheta = \frac{\text{Anzahl der tatsächlichen Füllstellen}}{\text{Anzahl der max. mögl. Füllstellen}}$$

Bei der max. zulässigen Frequenzabweichung $\Delta f/f$ = ± 15 ppm des 139 264-kbit/s-Signals variiert die rel. Füllfrequenz von 0,749 bis 0,807. In diesem Bereich ist der Wartezeitjitter, abhängig von der schaltungstechnischen Realisierung, gering.

Diese Lösung bietet den Vorteil, daß wegen der Verteilung der Zusatzsignale auf die ersten Teile W, X, Y und Z lediglich ein Pufferspeicher der Kapazität eines Bytes für die Zusatzsignale benötigt wird. Die gleichmäßige Verteilung der fünf Stopfinformationsbits C macht die Stopfinformation gegenüber Bündelstörungen unempfindlich. Die Verwendung lediglich eines möglichen Stopfbits S pro Reihe ergibt eine Unempfindlichkeit gegenüber Bitslips, die eine Neusynchronisation auf der Empfangsseite erfordern würden.

Eine Ausgestaltung des erfindungsgemäßen Verfahrens ist dem Patentanspruch 2 zu entnehmen.

Die Erfindung wird anhand der Fig. 2 näher erläutert. Diese zeigt eine Reihe des virtuellen Containers VC-4 nach Fig. 1. Die Reihe beginnt mit 1 byte des Pfadkopfteils POH. Die weiteren 260 byte sind in 20 Blöcke unterteilt, die jeweils einen ersten Teil zur Aufnahme von 1 byte und einen zweiten Teil für 12 byte enthalten. Die ersten Teile sind mit W, X, Y oder Z bezeichnet.

In der Fig. 2 unten ist gezeigt, daß ein erster Teil W 8 Informationsbits I, ein erster Teil X 1 Stopfinformationsbit C, 5 feste Stopfbits R und 2 frei verfügbare Meldeinformationsbits M, ein erster Teil Y 8 feste Stopfbits R und ein erster Teil Z 6 Informationsbits I, 1 mögliches Stopfbit S und 1 festes Stopfbit R enthält. Jeder zweite Teil eines Blockes dient der Aufnahme von 96 Informationsbits I.

Die Stopfinformationsbits C sind gleichmäßig über die Reihe verteilt. Haben alle einen Zustand logisch "1", dann ist das mögliche Stopfbit S tatsächlich ein Stopfbit. Haben dagegen alle 5 Stopfinformationsbits C einen logischen Zustand "O", dann wird anstelle des möglichen Stopfbits S ein Informationsbit I übertragen.

## Patentansprüche

1. Verfahren zum Einfügen eines asynchronen 139 264-kbit/s-Signals nach der CCITT-Empfehlung G.754 in den Pulsrahmen eines 155 520-kbit/s-Signals (STM-1) mit einem aus 9, jeweils zuerst 1 byte für einen Pfadkopfteil (POH) und anschließend weitere 260 byte enthaltenden Reihen bestehenden virtuellen Container (VC-4),

**dadurch gekennzeichnet,**

daß die weiteren Bytes in 20 Blöcke für je 13 byte unterteilt werden,

daß jeder Block in einen ersten Teil mit 1 byte bzw. 8 bit und in einen zweiten Teil mit 12 byte bzw. 96 bit unterteilt wird,

daß der erste Teil (W) der ersten Blöcke für jeweils 8 Informationsbits (I) bereitgestellt wird,

daß der erste Teil (X) der 2., 6., 10., 14., und 18. Blöcke nacheinander für jeweils ein Stopfinformationsbit (C), für 5 feste Stopfbits (R) und für 2 freiverfügbare Meldeinformationsbits (M) bereitgestellt wird,

daß der erste Teil (Y) der 3. bis 5., 7. bis 9., 11. bis 13., 15. bis 17. und 19. Blöcke für jeweils 8 feste Stopfbits (R) bereitgestellt wird,

daß der erste Teil (Z) des 20. Blocks nacheinander für jeweils 6 Informationsbits (I), 1 mögliches Stopfbit (S) und 1 festes Stopfbit (R) bereitgestellt wird und

daß der zweite Teil aller Blöcke für jeweils 96 Informationsbits (I) bereitgestellt wird.

2. Verfahren nach Anspruch 1,

**dadurch gekennzeichnet,**

daß alle 5 Stopfinformationsbits (C) einer Reihe den Zustand logisch "O" erhalten, wenn statt des möglichen Stopfbits (S) ein Informationsbit (I) übertragen wird, und

daß alle 5 Stopfinformationsbits (C) in einer Reihe den Zustand logisch "1" erhalten, wenn das mögliche Stopfbit (S) tatsächlich ein Stopfbit ist.

## Claims

1. Method of inserting an asynchronous 139,264 kbit/s signal according to CCITT Recommendation G.754 into the pulse frame of a 155,520 kbit/s signal (STM-1) with a virtual container (VC-4) comprising 9 rows each containing firstly 1 byte for a path overhead (POH) and subsequently a further 260 bytes, characterised in that the further bytes are subdivided into 20 blocks of 13 bytes each,

in that each block is subdivided into a first part with 1 byte or 8 bits and into a second part with 12 bytes or 96 bits,

in that the first part (W) of the first blocks is provided for 8 information bits (I) in each case,

in that the first part (X) of the 2nd, 6th, 10th, 14th and 18th blocks is provided successively for one justification information bit (C), for 5 fixed justification bits (R) and for 2 freely available message information bits (M) respectively,

in that the first part (Y) of the 3rd to 5th, 7th to 9th, 11th to 13th, 15th to 17th, and 19th blocks is provided for 8 fixed justification bits (R) in each case,

in that the first part (Z) of the 20th block is provided successively for 6 information bits (I), 1 possible justification bit (S) and 1 fixed justification bit (R) in each case, and

in that the second part of all the blocks is provided for 96 information bits (I) in each case.

2. Method according to Claim 1, characterised in that all 5 justification information bits (C) of a row assume the status of logical "0" when an information bit (I) is transmitted instead of the possible justification bit (S), and in that all 5 justification information bits (C) in a row assume the status of logical "1" when the possible justification bit (S) is actually a justification bit.

**Revendications**

1. Procédé pour l'insertion d'un signal asynchrone à 139 264 kbits/s selon la recommandation CCITT G.154 dans la trame d'impulsions d'un signal à 155 520 kbits/s (STM-1), comportant une zone virtuelle (VC-4) constituée par 9 séries contenant chacune tout d'abord 1 octet pour une partie d'entête de voie (POH) et ensuite 260 octets supplémentaires,

caractérisé par le fait

que les autres octets sont répartis en 20 blocs de chacun 13 octets,

que chaque bloc est subdivisé en une première partie comportant 1 octet ou 8 bits et en une seconde partie comportant 12 octets ou 96 bits,

que la première partie (W) des premiers blocs est préparée pour respectivement 8 bits d'information (I),

que la première partie (X) des 2-ème, 6-ème, 10-ème, 14-ème et 18-ème blocs est réglée successivement pour respectivement un bit d'information de bourrage (C) pour 5 bits fixes de bourrage (R) et pour 2 bits d'information de signalisation disponibles (M),

que la première partie (Y) des 3-ème à 5-ème, 7-ème à 9-ème, 11-ème à 13-ème, 15-ème à 17-ème et 19-ème blocs pour respectivement 8 bits de bourrage fixes (A) est préparée,

que la première partie (Z) du 20-ème bloc est préparée successivement pour respectivement 6 blocs d'information (I), 1 bit de bourrage possible (S) et 1 bit de bourrage fixe (R), et

que la seconde partie de tous les blocs est préparée pour respectivement 96 bits d'information (I).

2. Procédé suivant la revendication 1, caractérisé par le fait que les 5 bits d'information de bourrage (C) d'une série reçoivent tous l'état logique "0" lorsqu'à la place du bit de bourrage possible (S), un bit d'information (I) est transmis, et

que les 5 bits d'information de bourrage (C) d'une rangée reçoivent tous l'état logique "1" lorsque le bit de bourrage possible (S) est effectivement un bit de bourrage.

## FIG 1

270 byte

261 byte

260 byte

3 — SOH

AU-4

1 — AU-4 PTR

1 byte

5 — SOH

J1
B3
C2
G1
F2
H4
Z3
Z4
Z5

STM-1

VC-4
POH

VC-4

## FIG 2

1 | 12 byte

| POH | W | 96 I | X | 96 I | Y | 96 I | Y | 96 I | Y | 96 I |

| X | 96 I | Y | 96 I | Y | 96 I | Y | 96 I | X | 96 I |

| Y | 96 I | Y | 96 I | Y | 96 I | X | 96 I | Y | 96 I |

| Y | 96 I | Y | 96 I | X | 96 I | Y | 96 I | Z | 96 I |

$W$ = IIIIIIII     $X$ = CRRRRRMM     $Y$ = RRRRRRRR     $Z$ = IIIIIISR